# DEMANDE DE BREVET EUROPEEN

(11) **EP 2 645 687 A1**
(43) Date de publication de la demande: **02.10.2013**
(21) Numéro de dépôt: 13160812.7
(22) Date de dépôt: 25.03.2013
(51) Int. Cl.: H04M 3/533, H04M 3/493

(54) **Procede et dispositif d'envoi d'un message vocal**

(30) Priorité: 27.03.2012 FR 1252757
(71) Demandeur: Orange, 75015 Paris (FR)
(72) Inventeur: Moncomble, Ghislain, 22300 Lannion (FR); Suart, Christophe, 22300 Lannion (FR)
(74) Mandataire: Delumeau, François Guy

(57) **Abrégé**

Ce procédé d'envoi d'au moins un message vocal (MSG) généré à la demande d'un utilisateur, comporte les étapes suivantes :
- obtention (E10) du message vocal et (E11) d'au moins une information (IMSG) relative audit message vocal dont la durée (DMSG) dudit message vocal ;
- identification (E20) d'au moins un destinataire (DEST) dudit au moins un message vocal (E21) et obtention d'informations relatives (IDEST) audit au moins un destinataire;
- définition (E30) de paramètres de communication (PCOM) permettant d'envoyer ledit message vocal audit au moins un destinataire ;
- envoi du message vocal audit au moins un destinataire en utilisant lesdites informations relatives au message vocal et lesdits paramètres de communication.

## Description

L'invention se situe dans le domaine de l'envoi des messages vocaux dans un réseau.

En premier lieu, dans l'état actuel de la technique, l'enregistrement d'un message d'accueil sur une messagerie vocale s'effectue le plus souvent en composant le numéro de la messagerie vocale à partir d'un téléphone puis à se laisser guider par le menu d'un serveur vocal interactif pour dicter un message d'accueil, éventuellement l'écouter avant de le valider.

Ce mécanisme ne permet pas l'enregistrement de messages d'accueil sophistiqués.

Certains opérateurs ont développé des services spécifiques, pour permettre aux utilisateurs d'enregistrer des messages vocaux plus évolués. On connait par exemple des serveurs vocaux interactifs permettant à un utilisateur de choisir comme message d'accueil un message vocal pré-enregistré par une célébrité. Cette solution présente l'inconvénient majeur d'avoir nécessité le développement d'un serveur vocal interactif dédié à ce service.

De façon similaire, il n'existe pas, dans l'état actuel de la technique, de solution simple et satisfaisante pour diffuser un message vocal personnalisé, de façon automatique à des destinataires.

L'invention propose un procédé d'envoi de messages vocaux qui pallie au moins certains de ces inconvénients.

### Objet et résumé de l'invention

Ainsi, et selon un premier aspect, l'invention concerne un procédé d'envoi d'au moins un message vocal généré à la demande d'un utilisateur, ce procédé comportant :
- une étape d'obtention du message vocal et d'au moins une information relative audit message vocal dont la durée dudit message vocal ;
- une étape d'identification d'au moins un destinataire du message vocal et d'obtention d'informations relatives audit destinataire ;
- une étape de définition des paramètres de communication permettant d'envoyer ledit message vocal au destinataire ; et
- une étape d'envoi du message vocal au destinataire en utilisant les informations relatives au message vocal et les paramètres de communication.

Corrélativement, l'invention concerne un dispositif d'envoi d'au moins un message vocal généré à la demande d'un utilisateur, ce dispositif comportant :
- des moyens d'obtention du message vocal et d'au moins une information relative audit message vocal dont la durée dudit message vocal ;
- des moyens d'identification d'au moins un destinataire dudit au moins un message vocal et d'obtention d'informations relatives audit au moins un destinataire ;
- des moyens de définition des paramètres de communication permettant d'envoyer ledit message vocal audit au moins un destinataire ;
- des moyens d'envoi dudit message vocal audit au moins un destinataire en utilisant lesdites informations relatives au message vocal et lesdits paramètres de communication.

Ainsi, et d'une façon générale, le procédé d'envoi d'un message vocal selon l'invention permet à un utilisateur de définir un message vocal, ce message vocal étant destiné à être diffusé automatiquement vers un ou plusieurs destinataires, sans opération de l'utilisateur au moment de l'envoi.

Dans ce document, un destinataire peut être constitué par la messagerie vocale d'un utilisateur tiers ou la messagerie vocale de l'utilisateur lui-même. Dans ce dernier cas, le message vocal peut correspondre au message d'accueil que l'utilisateur souhaite restituer aux tiers lorsqu'ils appellent sa messagerie vocale.

Dans un mode particulier de réalisation, l'obtention du message vocal s'effectue en :
- enregistrant le message vocal ; ou en
- synthétisant le message vocal à partir d'un fichier texte ; ou en
- combinant au moins deux fichiers vocaux.

Le message vocal peut ainsi être généré par un texte lu par un logiciel de synthèse vocale, ou encore en effectuant différentes opérations de montage sur un fichier vocal fourni ou généré, par exemple en ajoutant un bruitage musical au fichier vocal, ou encore en concaténant différentes portions vocales, par exemple des portions issues d'une synthèse vocale et une ou plusieurs portions issues de l'enregistrement d'un utilisateur ou d'un tiers, par exemple d'une célébrité.

Dans un mode particulier de réalisation de l'invention, l'obtention de la durée du message vocal s'effectue en exploitant des données de description du fichier vocal correspondant au message vocal ou en effectuant une lecture du fichier vocal pour en déterminer sa durée.

Dans un mode particulier de réalisation de l'invention, les informations relatives au message vocal comportent, en plus de la durée de ce message, un texte utilisé pour obtenir le message vocal par synthèse vocale ou des informations relatives à des fichiers vocaux ayant permis d'obtenir ledit message vocal par combinaison.

Ces informations peuvent par exemple comporter les textes originaux des messages synthétisés, la chronologie, la durée respective et la langue de différentes séquences si le message est composé.

L'invention s'applique pour envoyer un ou plusieurs messages vocaux.

L'invention peut notamment être utilisée pour définir plusieurs messages d'accueil d'une entreprise, par exemple un message à restituer pendant les horaires de bureau et un à restituer en dehors des horaires de bureau.

L'invention peut aussi être utilisée pour diffuser des messages vocaux vers plusieurs tiers, les messages vocaux étant personnalisés par synthèse vocale avec le nom de chacun des tiers.

Le procédé selon l'invention comporte une étape d'identification du ou des destinataires du message vocal.

Dans un mode particulier de réalisation, cette étape permet de déterminer si le message est destiné à la mise à jour du message d'accueil de l'utilisateur, auquel cas le destinataire est une messagerie vocale de l'utilisateur, ou si le message est destiné à la messagerie vocale d'un ou plusieurs tiers.

On notera que l'invention permet également la mise à jour des messages d'accueil pour plusieurs terminaux de l'utilisateur, par exemple un terminal fixe et un terminal mobile.

Cette détermination s'effectue à partir des informations fournies par l'utilisateur. A cet effet, l'utilisateur peut par exemple remplir un formulaire sur Internet, ou indiquer ce choix via un serveur vocal interactif.

En variante, le procédé d'envoi selon l'invention pourrait ne s'appliquer qu'à un seul usage (par exemple mise à jour d'un message d'accueil) ; auquel cas le choix précité s'effectue par défaut.

Dans un mode particulier de réalisation, le procédé selon l'invention comporte, lorsque le destinataire du message est une messagerie vocale associée à l'utilisateur, une étape d'authentification d'un identifiant d'un terminal de l'utilisateur.

Cette étape d'authentification peut être exécutée par défaut, notamment si le procédé selon l'invention est mis en oeuvre par un terminal de l'utilisateur.

Cette étape d'authentification d'un terminal de l'utilisateur est particulièrement importante lorsque le procédé selon l'invention est mis en oeuvre par un serveur. Dans ce cas, l'authentification peut consister à envoyer un code de confirmation par SMS à un terminal de l'utilisateur dont le numéro est par exemple préenregistré et à demander à l'utilisateur de saisir ce code de confirmation dans un formulaire accessible par Internet.

L'invention comporte une étape d'obtention d'informations relatives aux destinataires.

Dans un mode particulier de réalisation, les informations relatives à cette messagerie vocale destinataire comportent un identifiant de l'opérateur dudit destinataire, un numéro d'un serveur d'accès à ladite messagerie vocale et un numéro de l'utilisateur ou du tiers.

Lorsque l'invention est mise en oeuvre pour envoyer un message sur la messagerie vocale d'un tiers, ce serveur d'accès à la messagerie vocale du tiers est par exemple un serveur de dépôt de message mis en oeuvre par l'opérateur du destinataire pour permettre aux utilisateurs de déposer des messages à des destinataires directement sur leur messagerie vocale, sans faire sonner le terminal de ces destinataires.

Lorsque l'invention est mise en oeuvre par un serveur pour envoyer un message sur la messagerie vocale de l'utilisateur, le numéro de serveur d'accès à la messagerie vocale de l'utilisateur est un numéro d'appel distant de la messagerie vocale permettant à l'utilisateur de modifier son message d'accueil.

Lorsque l'invention est mise en oeuvre par un terminal de l'utilisateur pour envoyer un message sur la messagerie vocale associée à ce terminal, le numéro du serveur de messagerie vocale peut être un numéro court. Il n'est généralement pas nécessaire de fournir le numéro du terminal lui-même.

Dans un mode particulier de réalisation, le procédé comporte, lorsque le destinataire est une messagerie vocale d'un destinataire tiers, une étape d'obtention d'un identifiant du terminal de l'utilisateur (terminal appelant). Cette caractéristique permet de présenter le numéro de l'appelant au destinataire.

Dans un mode particulier de réalisation de l'invention, l'identifiant de l'opérateur du destinataire est obtenu à partir dudit numéro du tiers ou en interrogeant une base de données.

L'identifiant de l'opérateur du destinataire permet ainsi d'obtenir le numéro du serveur d'accès à ladite messagerie vocale du destinataire, par exemple lorsque ce numéro n'est pas connu.

Préférentiellement, les informations relatives aux destinataires ne se limitent pas à la récupération et détermination des coordonnées du destinataire et de l'opérateur associé, mais comportent des paramètres du message vocal.

Ainsi, dans un mode particulier de réalisation, le procédé d'envoi selon l'invention comporte en outre une étape d'obtention d'au moins un paramètre du message vocal.

Ces paramètres peuvent être constitués par au moins une date d'envoi dudit message (par exemple une première date d'envoi et une période de répétition), une donnée de localisation d'un terminal de l'utilisateur ou du destinataire ou une donnée d'un calendrier de l'utilisateur ou du destinataire.

Le paramètre de date permet par exemple de modifier automatiquement une annonce d'accueil, en fonction de l'heure. On peut par exemple prévoir un message destiné à être restitué pendant les heures de travail, un message destiné à être restitué pendant la pause déjeuner, un message destiné à être restitué le soir et le week-end.

Ce paramètre permet également de personnaliser l'heure d'envoi de messages vocaux élaborés en nombre en fonction de leurs destinataires, par exemple pour une campagne publicitaire, à une heure optimale pour leur écoute.

Le paramètre de localisation de l'utilisateur permet d'envoyer un message vocal indiquant que l'utilisateur est en déplacement ou éloigné de son lieu de travail habituel. Le paramètre de localisation de destinataire permet de lui envoyer un message vocal élaboré en fonction de cette localisation.

Le paramètre constitué par une donnée d'un calendrier de l'utilisateur permet également d'envoyer un message vocal pour indiquer que l'utilisateur est en réunion. Le paramètre constitué par une donnée d'un calendrier du destinataire permet de prévoir la diffusion du message à une date à laquelle le destinataire est susceptible d'être disponible pour le recevoir, par exemple lorsqu'il n'est pas en réunion de travail.

Le procédé selon l'invention comporte une étape de définition des paramètres de communication permettant d'envoyer le message vocal aux destinataires.

Dans le mode de réalisation décrit ici, les paramètres de communication permettant d'envoyer le message vocal à un destinataire comportent une séquence d'actions définie pour le destinataire. Cette séquence d'actions comporte une première action constituée par l'appel du serveur d'accès à la messagerie vocale du destinataire suivie par des actions pouvant être choisies parmi :
- la fourniture du numéro du tiers si le message vocal est destiné à la messagerie vocale d'un tiers ;
- l'envoi d'une séquence de codes DTMF ;
- la composition d'un autre numéro de téléphone ;
- la lecture dudit message vocal ;
- l'envoi d'un code de validation.

Dans un mode particulier de réalisation, on prévoit une pause entre chaque action, par exemple de l'ordre d'une seconde afin de respecter le scénario du serveur vocal interactif. Cette pause peut également permettre d'effectuer des contrôles sur le bon déroulement d'une action comme expliqué ci-après.

Un délai plus long peut être prévu après l'appel du destinataire pour garantir un bon acheminement de l'appel.

L'action consistant à envoyer un code de validation sera préférentiellement déclenchée après un délai prédéterminé (par exemple une seconde) compté après l'exécution de la dernière action.

Lorsque le serveur vocal demande une interaction par mots clefs, la séquence d'actions peut comprendre la restitution d'un mot clef ou d'une phrase générée par synthèse vocale.

La phrase ou le mot clef est prédéterminée.

Avantageusement, les séquences d'actions sont déterminées en fonction du destinataire. Cette caractéristique permet d'interagir avec différents serveurs vocaux interactifs. En pratique, les séquences associées à un serveur vocal interactif donné sont déterminées lors d'une phase préliminaire.

Différentes séquences d'actions peuvent aussi être prédéfinies pour un même destinataire, par exemple en fonction de l'état de la messagerie vocale.

Dans un mode particulier de réalisation de l'invention, la séquence d'actions à exécuter pour un destinataire donné est mémorisée dans une base de données indexée par le numéro de ce destinataire. Elle peut dépendre du type de message vocal (message d'accueil ou à diffuser vers des tiers).

Dans un mode particulier de réalisation, les séquences d'actions associées à un serveur vocal interactif sont mises à jour régulièrement pour tenir compte de l'évolution du scénario joué par le serveur interactif.

Dans un mode de réalisation particulier, le procédé selon l'invention est mis en oeuvre par le terminal de l'utilisateur.

Ce mode de réalisation présente l'avantage d'un usage direct sur le terminal de l'utilisateur, et de la suppression de certaines contraintes, notamment celle de l'authentification de l'utilisateur.

En variante, le procédé selon l'invention est mis en oeuvre par un serveur centralisé.

Cette caractéristique permet de mettre en oeuvre l'invention à partir de terminaux basiques. Elle permet aussi de s'affranchir d'une mauvaise qualité de la communication entre le terminal et le réseau, et donc d'éviter la dégradation de codes DTMF par exemple. Elle permet aussi de mettre en oeuvre l'invention sans avoir de terminal appelant.

Pour l'envoi de messages vocaux à des tiers, la mise en oeuvre de l'invention est strictement identique, que l'invention soit mise en oeuvre par le terminal de l'utilisateur ou par un serveur centralisé.

Dans un mode particulier de réalisation, lorsque le serveur centralisé appelle un destinataire du message vocal, il remplace, dans le message d'appel son numéro par celui du terminal utilisateur afin que celui-ci soit présenté aux destinataires.

Le procédé selon l'invention comporte ensuite une étape d'envoi du message vocal aux destinataires en utilisant les informations relatives au message vocal (notamment la durée du message) et les paramètres de communication (notamment les séquences d'action).

Il est important de noter que cette étape d'envoi n'est pas nécessairement effectuée juste après les étapes d'obtention du message vocal, d'identification des informations relatives aux destinataires et de définition des paramètres de communication, notamment lorsqu'une date d'envoi du message a été définie.

En pratique, l'envoi du message vocal à un destinataire s'effectue en exécutant la séquence d'actions associée à ce destinataire en respectant les durées prédéfinies entre les différentes actions. Cette séquence consiste par exemple à appeler le numéro de téléphone prédéfini pour le destinataire, restituer des codes DTMF, restituer le message vocal et envoyer un code de validation.

Dans un mode particulier de réalisation, le procédé selon l'invention comporte une étape de contrôle de la bonne exécution d'au moins une des actions précitée, ce contrôle consistant à :
- obtenir un message de réponse suite à une action ; et à
- comparer ce message de réponse avec un résultat attendu pour ladite action.

Dans un mode de réalisation particulier, on contrôle la bonne exécution de toutes les actions de la séquence.

En variante, seul l'appel du destinataire et éventuellement l'envoi du code de validation sont contrôlés.

Dans un mode particulier de réalisation, le procédé comporte une étape de mémorisation des informations relatives aux actions validées et une étape de redémarrage à partir de la dernière action validée en cas d'action invalidée, un nombre prédéterminé de fois maximum, par exemple cinq fois.

Les pauses introduites entre les différentes actions permettent notamment l'exécution de ces contrôles.

Dans un mode particulier de réalisation dans lequel le message de réponse est un message vocal, le procédé selon l'invention comporte une étape de reconnaissance vocale de ce message de réponse et de comparaison avec un message attendu préenregistré.

En variante, on ne compare qu'une portion du message de réponse avec une portion du message attendu.

Préférentiellement, le procédé selon l'invention comporte une étape de filtrage du message de réponse, afin de supprimer des bruits de fond parasites.

Dans un mode particulier de réalisation, le procédé selon l'invention comporte, en cas d'échec d'une action, une étape d'analyse du message de réponse reçu en réponse à cette action, et la mise en place d'une action corrective choisie en fonction de ce message de réponse.

Dans un mode particulier de réalisation, le contrôle est considéré négatif si les deux messages comparés sont différents, en tenant compte des interférences inhérentes à une communication téléphonique.

En variante, le contrôle d'une action peut être considéré comme négatif si le procédé selon l'invention reconnaît un message d'erreur prédéfini pour cette action.

Dans un mode particulier de réalisation, l'action corrective consiste à corriger l'identifiant de l'opérateur du numéro du destinataire si le message de réponse est représentatif d'un appel vers un numéro inconnu, puis à modifier la séquence d'actions associée à un destinataire en fonction du nouvel identifiant d'opérateur ainsi redéfini.

Cette caractéristique permet de gérer de façon semi automatisée la problématique née du fait d'un usage de plus en plus fréquent de la portabilité des numéros.

Dans un mode particulier de réalisation, l'action corrective consiste à modifier la séquence d'actions associée à un destinataire, en fonction par exemple non exhaustif, de la présence ou non de messages vocaux non écoutés sur la messagerie vocale de ce destinataire, cette détermination étant effectuée suite à la reconnaissance du message de réponse du serveur vocal interactif.

Dans un mode particulier de réalisation, les différentes étapes du procédé d'envoi de message vocal sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé d'envoi de message vocal tel que mentionné ci-dessus.

L'invention vise aussi un programme d'ordinateur sur un support d'informations, ce programme étant susceptible d'être mis en oeuvre par un ordinateur, ce programme comportant des instructions adaptées à la mise en oeuvre des étapes du procédé d'exécution ou de procédé de gestion tels que mentionnés ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessus en référence aux dessins qui en illustrent un exemple de réalisation dépourvu du caractère limitatif.

Sur les figures :
- les figures 1A et 1B représentent, sous forme d'organigramme, les principales étapes d'un procédé d'envoi de message vocal conforme à un mode particulier de réalisation de l'invention ; et
- la figure 2 représente de façon schématique, un serveur conforme à un mode particulier de réalisation de l'invention.

### Description détaillée de l'invention

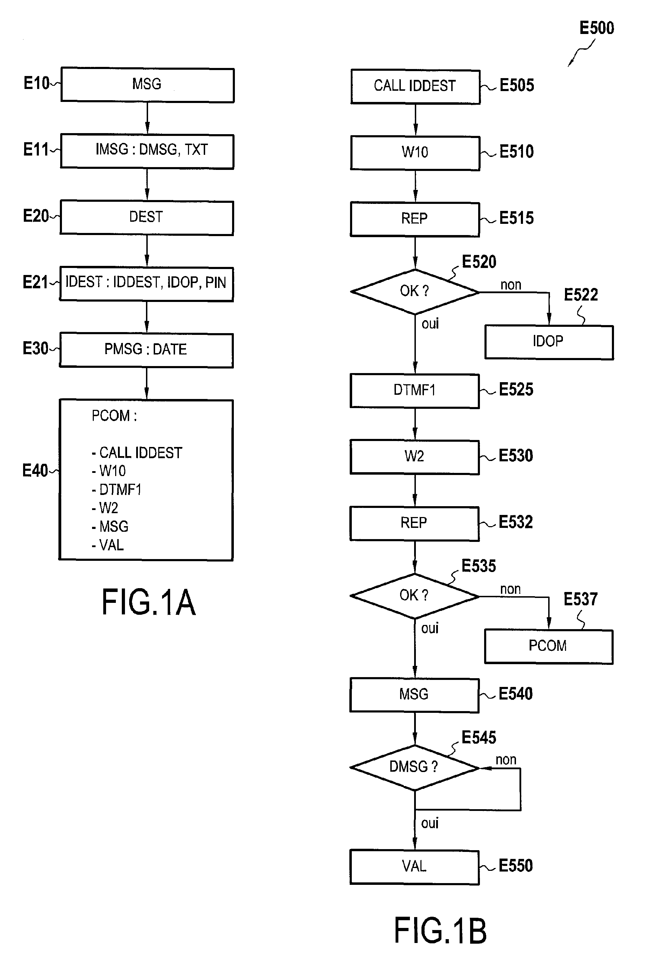

Les **figures 1A et 1B** représentent les principales étapes E10 à E550 d'un procédé d'envoi de message vocal conforme à un mode particulier de réalisation de l'invention.

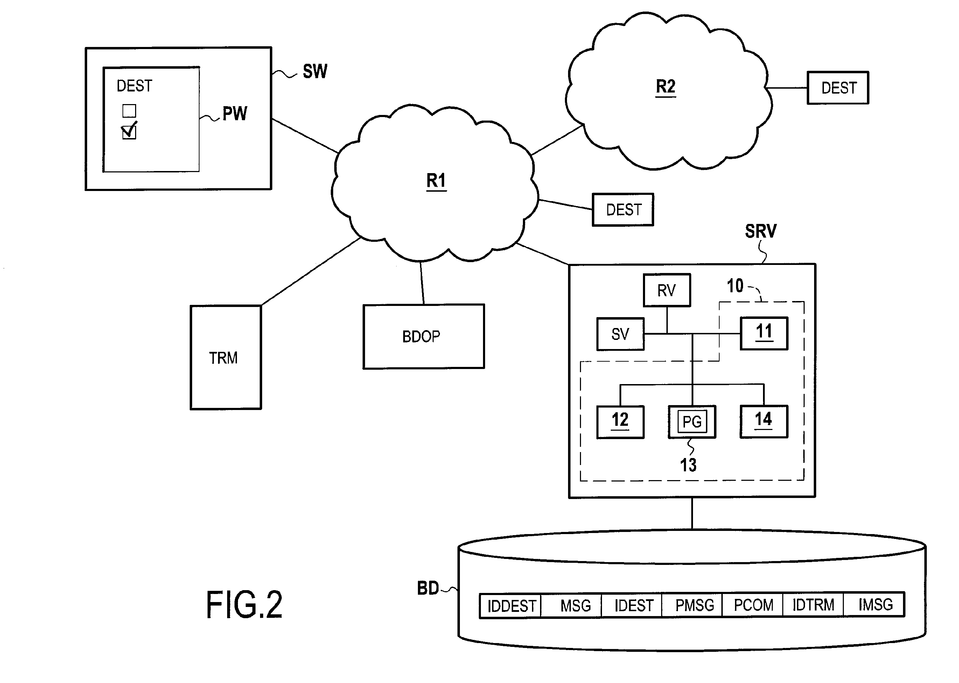

Dans l'exemple de réalisation décrit ici, ce procédé est mis en oeuvre par le serveur centralisé SRV de la figure 2.

Dans l'exemple décrit ici, on suppose que la préparation du message vocal et sa mémorisation dans une base de données BD du serveur SRV (figure 1A, étapes E10 à E40) n'est pas immédiatement suivie par l'envoi de ce message vocal aux destinataires (étape E500, figure 1B).

En référence à **la** **figure 2****,** on a représenté un serveur SRV conforme à l'invention. Il comporte un dispositif 10 d'envoi de message vocal conforme à l'invention.

Ce dispositif a l'architecture matérielle d'un ordinateur. Il comporte notamment un processeur 11, une mémoire vive de type RAM 12 une mémoire morte de type ROM 13 et des moyens de communication 14. Cette mémoire morte de type ROM 13 constitue un support au sens de l'invention ; elle enregistre un programme d'ordinateur PG conforme à l'invention qui comprend des instructions pour l'exécution des étapes représentées aux figures 1A et 1B.

Dans l'exemple de réalisation décrit ici, le serveur SRV selon l'invention comporte en outre un module SV de synthèse vocale et un module RV de reconnaissance vocale.

Nous supposerons dans cet exemple, qu'un message vocal MSG doit être diffusé à plusieurs boîtes vocales DEST de destinataires tiers hébergées sur des serveurs de messagerie vocale.

L'un de ces serveurs est connecté au réseau R1 auquel appartient le serveur SRV conforme à l'invention.

Une autre boite vocale DEST destinataire du message MSG est hébergée par un serveur de messagerie vocale appartenant à un autre réseau R2 interconnecté au réseau R1.

Dans l'exemple de réalisation décrit ici, le réseau R1 comporte également un serveur web SW hébergeant une page web PW comportant un formulaire permettant de définir les destinataires DEST du message vocal.

Le réseau R1 comporte également une base de données BDOP qui permet d'obtenir, à partir d'un numéro de téléphone, l'identifiant de l'opérateur de ce numéro.

Nous allons maintenant décrire, en référence à la figure 1A, la création et l'enregistrement du message MSG dans la base de données BD.

Nous supposerons tout d'abord, qu'au cours d'une phase préliminaire non représentée, l'utilisateur a fourni au serveur SRV via un formulaire un identifiant IDTRM de son terminal TRM.

Dans le mode de réalisation décrit ici, le message vocal MSG, généré à l'étape E10, est composé de plusieurs séquences à savoir une séquence vocale enregistrée par l'utilisateur au moyen de son terminal TRM et une séquence obtenue par synthèse vocale, au moyen du module de synthèse vocale SV du serveur SRV, à partir d'un fichier texte TXT.

En variante, le message vocal peut être enregistré via un ordinateur personnel à partir duquel l'utilisateur a accédé au formulaire précité.

La création du message vocal MSG à proprement parler ne fait pas partie de l'invention et ne sera pas détaillée ici.

Au cours de cette étape E11, le serveur SRV détermine en outre la durée DMSG du message. Les informations IMSG relatives au message vocal, à savoir dans cet exemple, sa durée des DMSG et le fichier texte TXT sont mémorisés dans la base de données DB.

Au cours d'une étape E20, l'utilisateur se connecte au serveur web SW pour identifier les destinataires DEST du message vocal au moyen du formulaire de la page web PW.

Au cours d'une étape E21 du procédé selon l'invention, le serveur SRV obtient des informations IDEST relatives aux destinataires.

Dans l'exemple décrit ici, les destinataires sont des messageries vocales de tiers.

Les informations IDEST comportent, dans cet exemple, pour chaque destinataire DEST un identifiant IDOP de l'opérateur du destinataire, un numéro IDDEST d'un serveur d'accès à la messagerie vocale du destinataire et un numéro du tiers.

Le numéro du tiers est par exemple extrait du formulaire de la page web PW.

Si l'identifiant IDOP de l'opérateur du destinataire n'est pas fourni explicitement par l'utilisateur, le serveur SRV peut le déterminer à partir du numéro du tiers par exemple en interrogeant la base de données BDOP.

Le serveur SRV obtient alors à partir de l'identifiant de l'opérateur du tiers, le numéro IDDEST du serveur d'accès à la messagerie vocale du destinataire. Le numéro IDDEST est par exemple stocké dans une base de données sur le réseau.

En variante, les informations IDEST comportent aussi le numéro de téléphone de l'appelant qui peut être extrait du formulaire de la page web si l'utilisateur l'a renseigné.

Les informations IDEST relatives aux destinataires sont mémorisées dans la base de données BD.

Au cours d'une étape E30, le serveur SRV obtient, dans ce mode de réalisation, des paramètres PMSG du message. Ces paramètres sont, dans cet exemple, constitués par une date DATE à laquelle le message doit être diffusé aux destinataires.

D'autres paramètres pourraient être obtenus, notamment des paramètres de localisation du terminal de l'utilisateur ou des données d'un calendrier de l'utilisateur.

Au cours d'une étape E40, le serveur SRV définit des paramètres PCOM de communications permettant d'envoyer le message vocal MSG aux destinataires. Il utilise pour cela les informations IDEST relatives à ces destinataires.

Dans le mode de réalisation décrit ici, les paramètres de communications PCOM permettant d'envoyer le message vocal aux destinataires sont constitués par une séquence d'action définie pour chaque destinataire.

Dans l'exemple de réalisation décrit ici, cette séquence d'action comporte une première action constituée par l'appel du numéro IDDEST du serveur d'accès à la messagerie vocale du tiers suivi par :
- la fourniture du numéro du terminal du tiers;
- une pause de 10 secondes ;
- la composition d'une séquence DTMF1 de code DTMF ;
- une pause de 2 secondes ;
- la lecture du message vocal MSG ; et
- l'envoi d'un code de validation VAL.

Cette séquence d'action est déterminée au cours d'une phase préliminaire non décrite de façon à fixer les pauses de 10 et 2 secondes en fonction de la durée d'acheminement de l'appel et de la durée des messages émis par le serveur vocal interactif correspondant à ce destinataire.

Ces paramètres de communications PCOM sont enregistrés dans la base de données BD.

Cette étape E40 termine l'enregistrement du message vocal, de ces informations et de ces paramètres dans l'exemple de réalisation décrit ici.

On se place maintenant à la date DATE à laquelle ce message doit être émis et on décrit, en référence à la figure 1B, l'étape E500 d'envoi de ce message aux destinataires.

Cette étape E500 détaillée, en un ensemble d'étapes E505 à E550, est effectuée pour chacun des destinataires définis à l'étape E20.

D'une façon générale, cette étape consiste à dérouler la séquence d'action enregistrée à l'étape E40.

Au cours d'une étape E505, le serveur SRV compose le numéro IDDEST du serveur d'accès à la messagerie vocale, puis fournit le numéro du tiers après avoir respecté une pause.

Au cours d'une étape E510, le serveur SRV attend 10 secondes, pour garantir que l'appel est bien acheminé.

Dans l'exemple de réalisation décrit ici, cette pause de 10 secondes permet également d'effectuer une étape E515 de contrôle du bon déroulement de l'appel.

A cet effet, à l'étape E515, le serveur utilise son module de reconnaissance vocal RV pour détecter un éventuel message d'erreur.

Dans le mode de réalisation décrit ici, si le serveur SRV reçoit un message d'erreur représentatif d'un mauvais numéro d'appel, le résultat d'un test E520 est négatif. Ce cas peut se présenter par exemple parce que le SRV n'a pas correctement déterminé l'opérateur associé au tiers. Le serveur met alors en oeuvre, à l'étape E522, une action corrective consistant à corriger l'identifiant de l'opérateur du destinataire. Le serveur SRV détermine ensuite un nouveau numéro IDDEST de serveur d'accès à la messagerie vocale relatif au nouvel identifiant de l'opérateur et reprend le procédé d'envoi à l'étape E505.

Si le résultat du test E520 est positif, ce test est suivi par une étape E525 d'émission de la séquence DTMF1 de codes DTMF.

Puis, le serveur attend deux secondes (étape E530).

Au cours d'une étape E532, le serveur SRV met en oeuvre son module RV de reconnaissance vocale pour enregistrer le message émis par le serveur vocal interactif en réponse à la séquence DTMF1.

Puis, au cours d'une étape E535 il compare ce message de réponse avec un message de réponse attendu.

En cas d'erreur, le résultat du test E535 est négatif. Ce test est suivi par une étape E537 au cours de laquelle le serveur SRV met en place une action corrective consistant à modifier la séquence d'actions associée à ce destinataire.

Si le message de réponse est celui attendu, le résultat du test E535 est positif.

Ce test étant suivi par l'envoi, à l'étape E540, du message vocal obtenu à l'étape E10.

Le serveur SRV attend ensuite la fin du message en utilisant la durée DMSG obtenue à l'étape E11.

Puis, au cours d'une étape E550, il émet un code de validation conformément à la séquence d'actions enregistrée à l'étape E40.

Le serveur d'accès à la messagerie vocale du tiers va ensuite déposer le message vocal ainsi envoyé par le procédé sur la messagerie vocale du tiers.

Le procédé d'envoi d'un message vocal tel que décrit précédemment peut également s'appliquer au cas où l'utilisateur souhaite modifier le message d'accueil de sa messagerie vocale.

Le déroulement du procédé est identique dans ce cas. La détermination de l'opérateur de la messagerie vocale de l'utilisateur est dans ce mode de réalisation évidente. L'utilisateur connaissant son opérateur, il peut renseigner l'identifiant de l'opérateur via le formulaire si le formulaire ne l'indique pas déjà. L'identifiant de l'opérateur peut aussi être extrait du terminal de l'utilisateur lorsque l'invention est mise en oeuvre à partir du terminal de l'utilisateur.

En ce qui concerne la séquence d'actions pour déposer un message d'accueil sur la messagerie vocale de l'utilisateur, elle peut par exemple correspondre à:
- l'appel du numéro du serveur d'accès à la messagerie vocale suivi d'une pause 10 secondes;
- l'envoi d'une séquence DTMF1 de codes DTMF;
- une pause de 2 secondes ;
- la lecture du message vocal MSG ;
- l'envoi d'un code de validation VAL.

Lorsque le procédé est mis en oeuvre par le terminal de l'utilisateur, il n'est pas nécessaire de procéder à l'authentification de l'utilisateur pour envoyer un message d'accueil sur sa messagerie vocale.

Cette étape d'authentification est cependant préférable pour envoyer un message sur sa messagerie vocale si l'invention est mise en oeuvre par un serveur centralisé. A cet effet, dans un mode de réalisation particulier, le procédé mis en oeuvre par un serveur centralisé peut commencer par la séquence d'actions suivante, entrecoupées de pauses de durées prédéterminées :
- composition du numéro du serveur d'accès à la messagerie vocale ;
- envoi du numéro de téléphone de l'utilisateur pour authentification ;
- envoi d'un code secret d'accès à la boîte à lettre de la messagerie vocale de l'utilisateur.

Les informations relatives à ce numéro de téléphone, au code secret, et les différentes séquences possibles d'instructions de ce serveur vocal interactif seront dans un tel cas conservées par le serveur centralisé.

## Revendications

1. Procédé d'envoi d'au moins un message vocal (MSG) généré à la demande d'un utilisateur, ce procédé comportant les étapes suivantes :
- obtention (E10) du message vocal et (E11) d'au moins une information (IMSG) relative audit message vocal dont la durée (DMSG) dudit message vocal ;
- identification (E20) d'au moins un destinataire (DEST) dudit au moins un message vocal (E21), ledit destinataire étant une messagerie vocale ;
- obtention d'informations relatives (IDEST) audit au moins un destinataire;
- définition (E30) de paramètres de communication (PCOM) permettant d'envoyer ledit message vocal audit au moins un destinataire ;
- envoi (E500) dudit message vocal audit au moins un destinataire en utilisant lesdites informations relatives au message vocal et lesdits paramètres de communication.

2. Procédé d'envoi selon la revendication 1, **caractérisé en ce que** ladite étape (E20) d'identification du destinataire permet de déterminer si ledit destinataire est une messagerie vocale dudit utilisateur ou une messagerie vocale d'un destinataire tiers.

3. Procédé d'envoi selon la revendication 2 **caractérisé en ce qu'il** comporte, lorsque ledit destinataire est une messagerie vocale de l'utilisateur, une étape d'authentification d'un identifiant (IDTRM) d'un terminal (TRM) de l'utilisateur.

4. Procédé d'envoi selon la revendication 2, **caractérisé en ce que** lesdites informations (IDEST) relatives à ladite messagerie vocale comportent un identifiant de l'opérateur (IDOP) dudit destinataire, un numéro (IDDEST) d'un serveur d'accès à ladite messagerie vocale et un numéro de l'utilisateur ou du tiers.

5. Procédé d'envoi selon la revendication 1 ou 4, **caractérisé en ce qu'il** comporte, lorsque ledit destinataire est un tiers ou une messagerie vocale d'un destinataire tiers, une étape d'obtention d'un identifiant (IDTRM) d'un terminal (TRM) dudit utilisateur.

6. Procédé selon la revendication 2, **caractérisé en ce que** lesdits paramètres de communication (PCOM) permettant d'envoyer ledit message vocal audit destinataire comportent une séquence d'actions définie pour ledit destinataire, ladite séquence d'action comportant une première action constituée par l'appel du serveur d'accès à ladite messagerie vocale suivie par des actions choisies parmi :
- la fourniture du numéro du tiers si le message est destiné à la messagerie vocale d'un tiers ;
- l'envoi d'une séquence de codes DTMF ;
- la composition d'un autre numéro ;
- l'attente d'une durée prédéterminée ;
- la lecture dudit message vocal ;
- l'envoi d'un code de validation.

7. Procédé selon la revendication 6, **caractérisé en ce qu'il** comporte une étape de contrôle (E520, E535) de la bonne exécution d'au moins une desdites actions consistant à :
- obtenir (E515, E532) un message de réponse suite à ladite action ; et
- à comparer (E520, E535) ce message de réponse avec un résultat attendu pour ladite action.

8. Procédé selon la revendication 6, **caractérisé en ce qu'il** comporte une étape de mémorisation des informations relatives aux actions validées et une étape de redémarrage à la dernière action validée en cas d'action invalidée, un nombre prédéterminé de fois maximum.

9. Procédé selon la revendication 6, **caractérisé en ce qu'il** comporte, en cas d'échec de la validation d'une action, une étape d'analyse du message de réponse reçue en réponse à cette action, et la mise en place d'une action corrective choisie en fonction dudit message de réponse.

10. Procédé selon la revendication 9, **caractérisé en ce que** ladite action corrective consiste à :
- corriger (E522) l'identifiant (IDOP) de l'opérateur du destinataire sur réception d'un message de réponse d'un appel vers un numéro inconnu puis à modifier la séquence d'actions associée à un destinataire en fonction d'un nouvel identifiant d'opérateur ainsi redéfini ; ou
- modifier (E537) la séquence d'actions associée à un destinataire, en fonction par exemple, de la présence ou non de messages vocaux non écoutés sur la messagerie vocale de l'utilisateur.

11. Dispositif d'envoi (10) d'au moins un message vocal généré à la demande d'un utilisateur, ce dispositif comportant :
- des moyens d'obtention du message vocal et d'au moins une information relative audit message vocal dont la durée dudit message vocal ;
- des moyens d'identification d'au moins un destinataire dudit au moins un message vocal, ledit destinataire étant une messagerie vocale ;
- des moyens d'obtention d'informations relatives audit au moins un destinataire ;
- des moyens de définition des paramètres de communication permettant d'envoyer ledit message vocal audit au moins un destinataire ;
- des moyens d'envoi dudit message vocal audit au moins un destinataire en utilisant lesdites informations relatives au message vocal et lesdits paramètres de communication.

12. Serveur (SRV) comportant un dispositif selon la revendication 11.

13. Serveur selon la revendication 12 **caractérisé en ce qu'il** comporte des moyens pour remplacer son identifiant par un identifiant (IDTRM) du terminal (TRM) de l'utilisateur dans les messages d'appels émis vers lesdits destinataires (DEST).

14. Programme d'ordinateur (PG) comportant des instructions pour l'exécution des étapes d'un procédé d'envoi de message vocal selon l'une quelconques des revendications 1 à 10 lorsque ledit programme est exécuté par un ordinateur.

15. Terminal comportant des moyens pour mettre en oeuvre un procédé selon l'une quelconque des revendications 1 à 10.
